# EUROPEAN PATENT APPLICATION

(11) **EP 1 864 954 A2**
(43) Date of publication of application: **12.12.2007**
(21) Application number: 07252003.4
(22) Date of filing: 16.05.2007
(51) Int. Cl.: C03C 27/06

(54) **Method for joining optical members, structure for integrating optical members and laser oscillation device**

(30) Priority: 06.06.2006 JP 2006157189
(71) Applicant: Kabushiki Kaisha TOPCON, Tokyo-to (JP)
(72) Inventor: Eno, Taizo, Tokyo-to (JP); Goto, Yoshiaki, Tokyo-to (JP); Momiuchi, Masayuki, Tokyo-to (JP)
(74) Representative: Neobard, William John

(57) **Abstract**

A method for joining optical members, comprising a step of forming one dielectric thin film on a joining surface of one optical member, a step of forming another dielectric thin film on a joining surface of another optical member, and a step of making contact without scattering light between the one dielectric thin film and the another dielectric thin film together, wherein optical wavelength property as required can be obtained by joining the another dielectric thin film with the one dielectric thin film.

## Description

The present invention relates to a method for joining optical members, to a structure and to a laser oscillation device.

In recent years, there have been strong demands for development of laser oscillation devices of smaller size and with higher output. One laser oscillation device designed in smaller size and for easily oscillating a laser beam is a solid-state laser oscillation device, and this solid-state laser oscillation device may comprises a plurality of optical members (solid-state laser media). Also, with the development of the optical members of smaller size, the optical members are integrated with each other by joining the optical members together.

In the past, integration of a plurality of optical members has been performed by joining the optical members by using an adhesive agent. With the development of smaller laser oscillation devices, on the other hand, the development of the laser oscillation device with higher output has been promoted. With the development of higher output laser oscillation devices, high-energy laser beams enter the optical members, and the optical members are thus exposed to higher temperatures.

In general, compared with the optical members, the adhesive agent is more easily deteriorated by laser beams or by high temperature. When the adhesive agent is used for integrating the optical members in the laser oscillation device with lower output, deterioration of the adhesive agent does not cause problems particularly because energy of the laser beam is low and the temperature of the optical members is also low. However, in higher power laser oscillation devices, deterioration of the adhesive agent tends to shorten the service life of the optical members, and has been a problem.

An example of a laser oscillation device, which uses optical members and generates laser beams with high output, is disclosed in JP-A-2004-111542

Embodiments of the present invention provide a method for integrating optical members, which are highly resistant to the deterioration caused by high-output laser beam or to high temperature, and also provide a laser oscillation device with a plurality of optical members integrated with each other.

There is disclosed a method for joining optical members, comprising a step of forming one dielectric thin film on a joining surface of one optical member, a step of forming another dielectric thin film on a joining surface of another optical member, and a step of making contact without scattering light between the one thin dielectric film and another dielectric thin film together, wherein optical wavelength property as required can be obtained by joining the another dielectric thin film with the one dielectric thin film.

There is also disclosed a method for joining optical members, wherein a dielectric film formed by joining the one dielectric thin film with another dielectric thin film is a multi-layer film.

Further, there is disclosed a method for joining optical members, wherein the contact without scattering light is optical contact. Also, there is disclosed a method for joining optical members, wherein the contact without scattering light is diffusion bonding. Further, there is disclosed a method for joining optical members, wherein the contact without scattering light is ultrasonic bonding.

Further, there is disclosed a structure for integrating optical members, comprising one dielectric thin film formed on a joining surface of one optical member, another dielectric thin film formed on a joining surface of another optical member, wherein the two optical members are joined together via contact without scattering light by joining the one dielectric thin film with the another dielectric thin film, and wherein a dielectric thin film with optical wavelength property as required is formed by joining the one dielectric thin film with the another dielectric thin film. Also, there is disclosed a structure for integrating optical members, wherein the dielectric film comprises multi-layer dielectric thin films, and one layer of the multi-layer films is formed by joining the one dielectric thin film with the another dielectric thin film by contact without scattering light. Further, there is disclosed a structure for integrating optical members, wherein the dielectric film comprises multi-layer dielectric thin films, wherein the one dielectric thin film and the another dielectric thin film are joined together via contact without scattering light, and wherein two adjacent layers of the multi-layer films are formed by the one dielectric thin film and the another dielectric thin film. Also, there is disclosed a structure for integrating optical members, wherein the one optical member is a laser crystal for emitting a fundamental light by means of an excitation light from a light source, the another optical member is a wavelength conversion crystal for converting wavelength of the fundamental light, and the dielectric thin films allow the fundamental light to pass through and reflect a wavelength-converted light. Further, there is disclosed a structure for integrating optical members, wherein the contact without scattering light is optical contact. Also, there is disclosed a structure for integrating optical members, wherein the contact without scattering light is diffusion bonding. Further, there is disclosed a structure for integrating optical members, wherein the contact without scattering light is ultrasonic bonding.

Further, there is disclosed a laser oscillation device, comprising a laser crystal for emitting a fundamental light by means of an excitation light from a light source, a wavelength conversion crystal being integrated with the laser crystal via a third dielectric film and for converting wavelength of the fundamental light, a first dielectric film formed on an incident surface of the laser crystal, and a second dielectric film formed on an exit surface of the wavelength conversion crystal, wherein the first dielectric film allows the excitation light to pass through and reflects the fundamental light, the third dielectric film is formed by joining a film on the laser crystal with a film on the wavelength conversion crystal by contact without scattering light, wherein the third dielectric film allows the fundamental light to pass through and reflects the wavelength conversion light, and wherein the second dielectric film reflects the fundamental light and allows the wavelength conversion light to pass through. Also, there is disclosed a laser oscillation device, wherein the contact without scattering light is optical contact. Further, there is disclosed a laser oscillation device, wherein the contact without scattering light is diffusion bonding. Also, there is disclosed a laser oscillation device, wherein the contact without scattering light is ultrasonic bonding.

In an embodiment, there are provided a step of forming one dielectric thin film on a joining surface of one optical member, a step of forming another dielectric thin film on a joining surface of another optical member, and a step of making contact without scattering light between the one dielectric film and another dielectric thin film together, and optical wavelength property as required can be obtained by joining another dielectric thin film with the one dielectric thin film. As a result, it is possible to abolish the use of adhesive agent for the joining of optical members and to prevent the shortening of the service life of the optical members caused by the deterioration of the adhesive agent.

Also, in an embodiment, there are provided one dielectric thin film formed on a joining surface of one optical member, another dielectric thin film formed on a joining surface of another optical member, and the two optical members are joined together via contact without scattering light by joining the one dielectric thin film with the another dielectric thin film, and a dielectric thin film with optical wavelength property as required is provided by joining the one dielectric thin film with the another dielectric thin film. As a result, it is possible to abolish the use of adhesive agent for the joining of optical members and to prevent the shortening of the service life of the optical members caused by the deterioration of the adhesive agent.

Further, in an embodiment, the dielectric film comprises multi-layer dielectric thin films, the one dielectric thin film and the another dielectric thin film are joined together via contact without scattering light, and two adjacent layers of the multi-layer films are formed by the one dielectric thin film and the another dielectric thin film. As a result, contact without scattering light can be attained between homogeneous films, and high-quality joining can be accomplished.

Also, in an embodiment, there are provided a laser crystal for emitting a fundamental light by means of an excitation light from a light source, a wavelength conversion crystal being integrated with the laser crystal via a third dielectric film and for converting wavelength of the fundamental light, a first dielectric film formed on an incident surface of the laser crystal, and a second dielectric film formed on an exit surface of the wavelength conversion crystal, wherein the first dielectric film allows the excitation light to pass through and reflects the fundamental light, the third dielectric film is formed by joining a film on the laser crystal with a film on the wavelength conversion crystal by contact without scattering light, the third dielectric film allows the fundamental light to pass through and reflects the wavelength conversion light, and the second dielectric film reflects the fundamental light and allows the wavelength conversion light to pass through. As a result, it is possible to abolish the use of adhesive agent for the joining of optical members, to prevent the deterioration of adhesive agent caused by high-output laser beam, to attain stable laser beam output, and to ensure longer service life of the laser oscillation device.

Embodiments of the invention will now be described, by way of example only, with reference to the accompanying drawings, in which:
Fig. 1 is a schematical block diagram of a laser oscillation device, in which the present invention is carried out;
Fig. 2 is a drawing to explain an optical resonator where two optical members are integrated;
Fig. 3 is a schematical drawing to show a dielectric film formed on the optical member; and
Fig. 4 is a partial enlarged view of the dielectric film shown in Fig. 3.

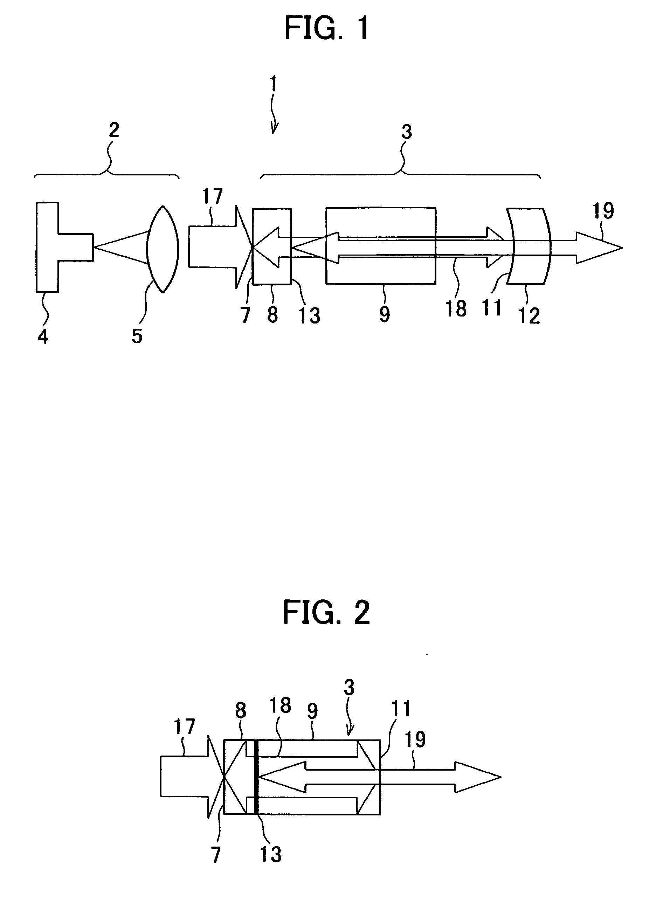

First, referring to Fig. 1, description will be given on general features of a laser oscillation device, in which the present invention is carried out.

Fig. 1 shows an LD pumped solid-state laser device of one-wavelength oscillation type, which is an example of a laser oscillation device 1.

In Fig. 1, reference numeral 2 denotes a light emitting unit, and numeral 3 represents an optical resonator. The light emitting unit 2 comprises an LD light emitter 4 and a condenser lens 5. Further, the optical resonator 3 comprises a first optical crystal (laser crystal 8) where a first dielectric reflection film 7 is formed, a second optical crystal (nonlinear optical crystal (NLO); (wavelength conversion crystal 9 for second harmonic wave)), and a concave mirror 12 where a second dielectric reflection film 11 is formed. At the optical resonator 3, a laser beam is pumped, resonated, amplified and outputted. As the laser crystal 8, Nd:YVO₄ or the like is used, and as the wavelength conversion crystal 9 for second harmonic wave, KTP (KTiOPO₄; potassium titanyl phosphate) or the like is used.

The light emitting unit 2 emits a laser beam with wavelength of 809 nm, for instance, and the LD light emitter 4, which is a semiconductor laser, is used. Also, the LD light emitter 4 has the function as a pumping light generator for generating an excitation light 17. The light emitting unit 2 is not limited to a semiconductor laser, and any type of light source means may be adopted so far as the light source means can generate a laser beam.

The laser crystal 8 is to generate a fundamental wave 18 with a predetermined wavelength from the excitation light 17. As the laser crystal 8, Nd:YVO₄ with oscillation line of 1064 nm is used. In addition to this, YAG (yttrium aluminum garnet) doped with Nd³⁺ ions or the like may be adopted. YAG has oscillation line of 946 nm, 1064 nm, 1319 nm, etc. Also, Ti (Sapphire) or the like with oscillation line of 700 to 900 nm may be used.

On an end surface (an incident surface) of the laser crystal 8 closer to the LD light emitter 4, the first dielectric reflection film 7 is formed. On an exit surface of the laser crystal 8, a third dielectric reflection film 13 is formed. The second dielectric reflection film 11 is formed on the concave mirror 12.

The first dielectric reflection film 7 is highly transmissive to a laser beam (an excitation light 17) from the LD light emitter 4, and the first dielectric reflection film 7 is highly reflective to an oscillation wavelength (a fundamental wave 18) of the laser crystal 8.

The third dielectric reflection film 13 is highly transmissive to the fundamental wave 18, and the third dielectric reflection film 13 is highly reflective to a second harmonic wave 19 (SECOND HARMONIC GENERATION (SHG)), which is converted by the wavelength conversion crystal 9 for second harmonic wave.

The concave mirror 12 is arranged at a position to face toward the laser crystal 8. The surface of the concave mirror 12 closer to the laser crystal 8 is designed in a shape of a concave spherical mirror with an adequate radius, and the second dielectric reflection film 11 is formed on the surface of the concave mirror 12. The second dielectric reflection film 11 is highly reflective to the fundamental wave 18, and the second dielectric reflection film 11 is highly transmissive to the second harmonic wave 19.

As a dielectric material to make up the reflection film, TiO₂ (n = 2.3 to 2.55) or the like is used as a high refractive material, and MgF₂ (n = 1.32 to 1.39) or the like is used as a low refractive material. The high refractive material and the low refractive material make up together an alternately deposited multi-layer film.

A linearly polarized excitation light 17 is emitted from the light emitting unit 2. The excitation light 17 passes through the first dielectric reflection film 7 and enters the laser crystal 8, and the fundamental wave 18 is oscillated. Then, the fundamental wave 18 is pumped between the first dielectric reflection film 7 and the second dielectric reflection film 11. Further, the fundamental wave 18 enters the wavelength conversion crystal 9 for second harmonic wave, and the second harmonic wave 19 is generated.

The second harmonic wave 19 is projected after passing through the second dielectric reflection film 11 and is reflected by the third dielectric reflection film 13. Then, the second harmonic wave 19 is projected after passing through the second dielectric reflection film 11. When the laser beam passes through the laser crystal 8, the polarizing condition is changed. However, the second harmonic wave 19 is reflected by the third dielectric reflection film 13 and the second harmonic wave 19 does not pass through the laser crystal 8, therefore the polarizing condition of the second harmonic wave 19 is maintained. And then a linearly polarized second harmonic wave (laser beam) is projected from the light resonator 3.

As described above, the first dielectric reflection film 7 of the laser crystal 8 is combined with the second dielectric reflection film 11 of the concave mirror 12 and the laser beam from the LD light emitter 4 is pumped to the laser crystal 8 through the condenser lens 5, and the light is reciprocally projected between the first dielectric reflection film 7 of the laser crystal 8 and the second dielectric reflection film 11 of the concave mirror 12. As a result, the light is confined for long time, and the light can be resonated and amplified.

Within the light resonator 3, which comprises the first dielectric reflection film 7 of the laser crystal 8 and the second dielectric reflection film 11 of the concave mirror 12, the wavelength conversion crystal 9 for second harmonic wave is inserted. A strong coherent light such as a laser beam enters the wavelength conversion crystal 9 for second harmonic wave, and a second harmonic wave is generated, which doubles frequency of the light. The generation of the second harmonic wave is called "second harmonic generation". Therefore, when the laser beam enters the laser crystal 8 and the fundamental wave 18 of 1064 nm is oscillated, a laser beam with wavelength of 532 nm (green laser beam) is projected from the laser oscillation device 1.

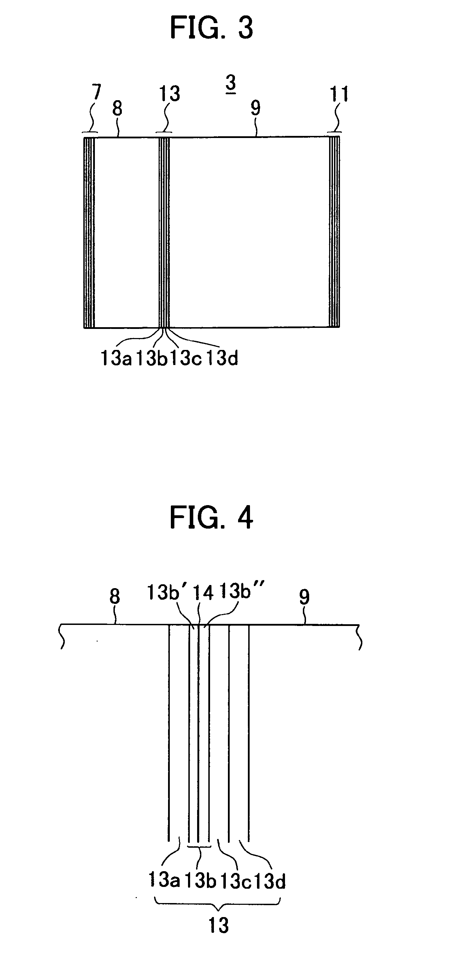

Fig. 2 shows the optical resonator 3, in which the laser crystal 8, i.e. an optical member, and the wavelength conversion crystal 9 for second harmonic wave are integrated. In Fig. 2 and Fig. 3, the same component as shown in Fig. 1 is referred by the same symbol.

The laser crystal 8 and the wavelength conversion crystal 9 for second harmonic wave are integrated with each other via the third dielectric reflection film 13 by contact without scattering light of joining method. Also, as contact without scattering light, optical contact (contact without scattering light between optical interfaces), diffusion bonding and ultrasonic bonding, etc. are included.

On an incident surface of the laser crystal 8, the first dielectric reflection film 7 is formed, and on an exit surface of the wavelength conversion crystal 9 for second harmonic wave, the second dielectric reflection film 11 is formed. Because the second dielectric reflection film 11 is formed on the exit surface of the wavelength conversion crystal 9 for second harmonic wave, the concave mirror 12 is omitted.

After entering the laser crystal 8, the excitation light 17 is pumped as the fundamental wave 18 between the first dielectric reflection film 7 and the second dielectric reflection film 11. Further, at the wavelength conversion crystal 9 for second harmonic wave, the fundamental wave 18 is oscillated to generate the second harmonic wave 19, and the second harmonic wave 19 is projected after passing through the second dielectric reflection film 11.

Next, referring to Fig. 3, description will be given on integration of the laser crystal 8 with the wavelength conversion crystal 9 for second harmonic wave. Also, following description is a case that contact without scattering light is optical contact.

The first dielectric reflection film 7, the third dielectric reflection film 13 and the second dielectric reflection film 11 are deposited in multiple layers respectively so that thin films of the materials used can have optical wavelength property as required. As a result, optical performance characteristics as required are provided.

For example, Ta₂O₅ and SiO₂ are alternately deposited in several tens of layers, and the first dielectric reflection film 7 is formed. In Fig. 3, the first dielectric reflection film 7, the third dielectric reflection film 13 and the second dielectric reflection film 11 are represented each in four layers for convenience purpose.

It is supposed that the third dielectric reflection film 13 comprises thin films 13a, 13b, 13c and 13d. A boundary exists in one of the thin films 13a, 13b, 13c and 13d, the laser crystal 8 and the wavelength conversion crystal 9 are jointed together via optical contact of the boundaries.

For instance, when it is supposed that a boundary 14 is at an intermediate position of the thin film 13b, a thin film 13b', which is a part of the thin film 13b and the thin film 13a, are deposited on the exit surface of the laser crystal 8. On the incident surface of the wavelength conversion crystal 9 for second harmonic wave, a thin film 13b", which is the rest part of the thin film 13b, and the thin films 13c and 13d are deposited.

The exit surface of the laser crystal 8 and the incident surface of the wavelength conversion crystal 9 for second harmonic wave are finished to have such flatness and flat surface roughness as capable of optical contact. It is designed that the flatness and the flat surface roughness as capable of optical contact can be maintained after the thin film 13b' and the thin film 13b" have been deposited.

By cleaning up the joining surface of the thin film 13b' and the joining surface of the thin film 13b" and by putting the thin film 13b' and the thin film 13b" closer to each other, the laser crystal 8 and the wavelength conversion crystal 9 for second harmonic wave are pressed tightly to each other.

By achieving optical contact between the thin films 13b' and 13b", the laser crystal 8 and the wavelength conversion crystal 9 for second harmonic wave are joined together.
Under the joined condition, the thin film 13b is made up with the thin films 13b' and 13b". The joining between the thin films 13b' and 13b" is the joining by homogeneous materials, and high affinity is assured. No shearing occurs due to the difference of thermal expansion between the thin films 13b' and 13b".

After the joining, the thin films 13b' and 13b" fulfill the function as the thin film 13b. Further, the thin films 13a, 13b, 13c and 13d fulfill the function as the third dielectric reflection film 13.

In the embodiment as described above, joining is achieved within one layer of thin film, while joining via optical contact may be made at the boundary between thin films. For instance, joining may be accomplished between the thin film 13b and the thin film 13c.

As the joining method without scattering light, for example, the surfaces to be joined are pressed against each other under heated condition. Or, a certain type of liquid, e.g. pure water, is interposed between the thin film 13b' and the thin film 13b", and the thin film 13b' and the thin film 13b" are pressed together and heated further to remove the liquid. Then optical contact is attained.

Further, as the joining method, diffusion bonding or ultrasonic bonding may be used.

As the cleaning method to clean up the joining surface of the thin film 13b' and the joining surface of the thin film 13b" and further to make active the thin film 13b' and the thin film 13b", cleaning by using a material with HF group or OH group, cleaning by using ultrasonic vibration, cleaning by using ion sputter, cleaning by using plasma, etc., may be employed.

The invention is not restricted to the described features of the embodiments.

## Claims

1. A method for joining optical members, comprising a step of forming one dielectric thin film on a joining surface of one optical member (8), a step of forming another dielectric thin film on a joining surface of another optical member (9), and a step of making contact without scattering light between said one dielectric thin film and said another dielectric thin film together, wherein optical wavelength property as required can be obtained by joining said another dielectric thin film with said one dielectric thin film.

2. A method for joining optical members according to claim 1, wherein a dielectric film (13) formed by joining said one dielectric thin film with said another dielectric thin film is a multi-layer film.

3. A method for joining optical members according to claim 1, wherein said contact without scattering light is optical contact.

4. A method for joining optical members according to claim 1, wherein said contact without scattering light is diffusion bonding.

5. A method for joining optical members according to claim 1, wherein said contact without scattering light is ultrasonic bonding.

6. A structure for integrating optical members, comprising one dielectric thin film formed on a joining surface of one optical member (8), another dielectric thin film formed on a joining surface of another optical member (9), wherein said two optical members (8) and (9) are joined together via contact without scattering light by joining said one dielectric thin film with said another dielectric thin film, and wherein a dielectric thin film (13) with optical wavelength property as required is formed by joining said one dielectric thin film with said another dielectric thin film.

7. A structure for integrating optical members according to claim 6, wherein said dielectric film (13) comprises multi-layer dielectric thin films, and one layer of the multi-layer films is formed by joining said one dielectric thin film with said another dielectric thin film by contact without scattering light.

8. A structure for integrating optical members according to claim 6, wherein said dielectric film (13) comprises multi-layer dielectric thin films, wherein said one dielectric thin film and said another dielectric thin film are joined together via contact without scattering light, and wherein two adjacent layers of the multi-layer films are formed by said one dielectric thin film and said another dielectric thin film.

9. A structure for integrating optical members according to claim 6, wherein said one optical member (8) is a laser crystal for emitting a fundamental light (18) by means of an excitation light (17) from a light source (2), said another optical member (9) is a wavelength conversion crystal for converting wavelength of said fundamental light, and said dielectric thin films (13) allow said fundamental light to pass through and reflect a wavelength conversion light (19).

10. A structure for integrating optical members according to claim 6, claim 7 or claim 8, wherein said contact without scattering light is optical contact.

11. A structure for integrating optical members according to claim 6, claim 7 or claim 8, wherein said contact without scattering light is diffusion bonding.

12. A structure for integrating optical members according to claim 6, claim 7 or claim 8, wherein said contact without scattering light is ultrasonic bonding.

13. A laser oscillation device, comprising a laser crystal (8) for emitting a fundamental light (18) by means of an excitation light (17) from a light source (2), a wavelength conversion crystal (9) being integrated with said laser crystal (8) via a third dielectric film (13) and for converting wavelength of said fundamental light, a first dielectric film (7) formed on an incident surface of said laser crystal, and a second dielectric film (11) formed on an exit surface of said wavelength conversion crystal, wherein said first dielectric film allows said excitation light to pass through and reflects said fundamental light, said third dielectric film is formed by joining a film on said laser crystal with a film on said wavelength conversion crystal by contact without scattering light, wherein said third dielectric film allows said fundamental light to pass through and reflects said wavelength conversion light, and wherein said second dielectric film reflects said fundamental light and allows said wavelength conversion light to pass through.

14. A laser oscillation device according to claim 13, wherein said contact without scattering light is optical contact.

15. A laser oscillation device according to claim 13, wherein said contact without scattering light is diffusion bonding.

16. A laser oscillation device according to claim 13, wherein said contact without scattering light is ultrasonic bonding.
